# FASCICULE DE BREVET EUROPEEN

(11) **EP 3 273 087 B1**
(45) Date de publication et mention de la délivrance du brevet: **31.10.2018**
(21) Numéro de dépôt: 17177507.5
(22) Date de dépôt: 22.06.2017
(51) Int. Cl.: F16F 7/10, B64C 27/04

(54) **RESONATEUR, ET AERONEF MUNI DE CE RESONATEUR**
RESONATOR UND MIT DEM RESONATOR VORGESEHENES LUFTFAHRZEUG
A RESONATOR AND AN AIRCRAFT PROVIDED WITH THE RESONATOR

(30) Priorité: 19.07.2016 FR 1601110
(43) Date de publication de la demande: 24.01.2018
(73) Titulaire: Airbus Helicopters, 13725 Marignane Cedex (FR)
(72) Inventeur: BOCOVIZ, Claude, 13190 ALLAUCH (FR); ECARD, Valentin, 13300 SALON DE PROVENCE (FR); INQUIETE, Guillaume, 13100 AIX EN PROVENCE (FR); EBERHARD, Alain, 13880 VELAUX (FR); TAILLAND, Laurine, 30760 SAINT JULIEN DE PEYROLAS (FR)
(74) Mandataire: GPI & Associés

(56) Documents cités:
- EP-A1- 0 058 117
- FR-A1- 2 739 670
- FR-A1- 2 961 570
- US-A- 4 566 703
- US-A1- 2006 272 498

## Description

La présente invention concerne un résonateur et un aéronef muni de ce résonateur.

La présente invention relève des mécanismes visant à réduire un niveau vibratoire. En particulier, l'invention vise des mécanismes destinés à des aéronefs, tels que des giravions par exemple.

En effet, les giravions sont par nature soumis à des vibrations principalement générées de façon naturelle par une voilure tournante du giravion. Les différentes vibrations existantes peuvent perturber le confort de l'équipage et des passagers et détériorer l'état de pièces et d'équipements du giravion.

Pour y remédier, un absorbeur de vibrations de type résonateur peut être utilisé. Un résonateur produit un effet anti-résonance à une fréquence prédéterminée dite « fréquence d'antirésonance ».

Un résonateur comporte classiquement un organe dénommé « masse sismique » ou « masse battante » relié à un support par un moyen de mobilité, tel qu'une lame élastique. Le moyen de mobilité est alors attaché à une structure vibrante. Lorsque la structure vibrante est soumise à des vibrations, le résonateur est ainsi excité par cette structure vibrante. Il en résulte un battement de la masse sismique destiné à contrecarrer les vibrations originelles subies par la structure.

Pour optimiser l'efficacité du résonateur, la fréquence d'antirésonance du résonateur est réglée afin que cette fréquence propre devienne égale à la fréquence d'excitation des vibrations exercées sur la structure à amortir.

Par exemple, les giravions sont munis d'au moins un rotor principal lié à une cellule. Ce rotor principal participe au moins partiellement à la sustentation voire à la propulsion de l'aéronef.

Le rotor principal est entraîné en rotation par une installation motrice comprenant au moins un moteur relié mécaniquement à une boîte de transmission de puissance. La boîte transmission de puissance est en outre munie d'un mât rotor relié à la tête du rotor principal. Dès lors, chaque moteur met en mouvement la boîte de transmission de puissance, cette boîte de transmission de puissance entraînant la rotation du rotor principal.

La boîte de transmission de puissance est fixée à un plancher mécanique de la cellule par des éléments de fixation. De tels éléments de fixation peuvent inclure des barres de suspension articulées à un sommet de la boîte de transmission de puissance.

Dès lors, un résonateur peut être interposé entre chaque barre de suspension et le plancher mécanique. Par exemple, un tel résonateur comporte une masse sismique qui est portée par une lame. Cette lame s'étend longitudinalement d'une première extrémité portant la masse sismique vers une deuxième extrémité qui est articulée d'une part à une barre de suspension et d'autre part au plancher mécanique.

Certains résonateurs sont dits « semi-actifs ».

Un résonateur semi-actif permet de déplacer manuellement en translation une masse sismique par rapport à une lame pour permettre au résonateur de traiter des phénomènes vibratoires se produisant à diverses fréquences.

Le réglage du résonateur se fait donc par la translation de la masse sismique mobile par rapport à lame. Ce déplacement permet notamment de modifier la position du centre de gravité du résonateur, et de modifier la réponse vibratoire du résonateur suite à une sollicitation.

De part son environnement, la masse sismique est soumise à de fortes accélérations à des fréquences importantes. Par exemple, la masse sismique peut subir des accélérations atteignant une valeur égale à vingt fois l'accélération de la pesanteur, et peut se déplacer sur une amplitude d'une dizaine de centimètres.

Si le guidage en translation d'une telle masse sismique est fait avec un jeu de montage, le résonateur peut se détériorer rapidement. Si le guidage en translation d'une telle masse sismique est fait sans jeu de montage, le résonateur peut s'avérer inutilisable en raison des frottements exercés contre la masse sismique.

Certains résonateurs proposent de guider une masse mobile à l'aide de trois colonnettes qui s'étendent longitudinalement. Ce système est hyperstatique. Dès lors, les jeux présents entre la masse et les colonnettes sont difficilement maitrisables. De tels jeux peuvent être gênants dans le cadre d'une utilisation pour suspendre, à une cellule d'aéronef, une boîte de transmission de puissance subissant des vibrations importantes. En effet, ces jeux risquent d'induire une usure prématurée du résonateur.

Par ailleurs, l'agencement d'un résonateur peut s'avérer délicat dans un espace encombré par divers organes. Par exemple, l'agencement d'une masse sismique d'une dizaine de kilogrammes pour un résonateur supportant une boîte de transmission de puissance peut être délicat.

Le document FR 2961570 propose un résonateur muni d'une masse principale et d'une masse auxiliaire qui sont montées sur un support. La masse auxiliaire est agencée dans un carter qui est fixé à la masse principale. La masse auxiliaire comporte un organe fileté agencé autour d'une vis de manoeuvre à l'intérieur du carter. Un moyen de manoeuvre manuel en prise avec la vis de manoeuvre permet d'entraîner en rotation la vis sans fin de manoeuvre pour déplacer la masse auxiliaire en translation le long de cette vis de manoeuvre.

La masse auxiliaire comporte une masse primaire et une masse secondaire. La masse secondaire est agencée dans un renfoncement de la masse primaire. La masse primaire et la masse secondaire sont traversées par la vis sans fin. Dès lors, l'organe fileté qui coopère avec la vis sans fin est agencé dans la masse secondaire, la masse secondaire étant agencée dans la masse primaire. Au moins un moyen de rappel tend à éloigner la masse primaire de la masse secondaire pour les plaquer respectivement contre une première face interne et une deuxième face interne du carter.

Le document FR 2.739.670 décrit un résonateur muni d'une masse de réglage mobile en translation. La masse de réglage comprend deux sous-ensembles coaxiaux.

La masse de réglage est guidée en translation par des patins poussés par des ressorts contre un carter. Ces patins s'étendent selon une génératrice de la masse de réglage, à savoir sensiblement parallèlement à l'axe de translation de la masse de réglage.

Le document US 6.651.988 est éloigné du domaine de l'invention en n'ayant pas trait à un résonateur. Ce document US 6.651.988 décrit un actionneur hydraulique muni de moyens d'étanchéité.

De même, le document US 2006/272498 est éloigné du domaine de l'invention en n'ayant pas trait à un résonateur. Ce document US 2006/272498 décrit un vérin hydraulique.

Le document US 2.180.795 est également éloigné du domaine de l'invention en n'ayant pas trait à un résonateur. Ce document US 2.180.795 décrit encore un piston.

Les documents US 4566703 et EP 0058117 sont aussi connus.

La présente invention a alors pour objet de proposer un résonateur innovant.

Selon l'invention, un résonateur est muni d'un organe pesant et d'une lame élastique, cet organe pesant comprenant un carter fixé à la lame élastique, l'organe pesant comprenant un ensemble massique qui est mobile en translation dans le carter selon une direction longitudinale, le résonateur comprenant une vis sans fin engagée dans un écrou de coulissement de l'ensemble massique, le résonateur comprenant un moyen d'entraînement apte à déplacer en rotation la vis sans fin afin qu'une rotation de la vis sans fin induise ladite translation.

Le carter présente une face interne qui délimite partiellement au moins deux espaces cylindriques présentant chacun une génératrice parallèle à la direction longitudinale, les deux espaces cylindriques étant disposés en dehors et voire de part et d'autre d'un espace central, la vis sans fin étant agencée dans l'espace central, l'ensemble massique comportant deux masses coulissant respectivement dans les deux espaces cylindriques. L'ensemble massique comprend un support portant ledit écrou de coulissement, chaque masse comprenant au moins un élément pesant fixé au support. Chaque masse présente au moins deux moyens de pression interposés entre cette masse et la face interne, chaque moyen de pression comprenant une gorge ménagée dans une circonférence d'une masse, chaque gorge décrivant une ligne fermée, chaque moyen de pression comprenant au moins un organe élastique disposé dans ladite gorge et une bague fendue plaquée contre ladite face interne par ledit au moins un organe élastique du moyen de pression, ladite bague fendue saillant partiellement de ladite gorge.

Par exemple, la lame s'étend longitudinalement le long d'un axe d'extension d'un pied relié à une structure vibrante vers une extrémité libre. Le carter de l'organe pesant est alors fixé à l'extrémité libre.

La direction longitudinale d'extension de la vis sans fin est éventuellement parallèle à l'axe d'extension de la lame lorsque la lame ne fléchit pas.

Par ailleurs, l'expression « moyen d'entraînement apte à déplacer en rotation la vis sans fin » signifie que le moyen d'entraiment génère la rotation de la vis sans fin autour de la direction longitudinale pour visser/dévisser la vis sans fin dans l'écrou de coulissement.

L'expression « espace cylindrique » désigne un volume prenant la forme d'un cylindre obtenu à l'aide d'une génératrice parcourant une ligne fermée.

Dès lors, le résonateur comporte une masse selon l'invention par espace cylindrique. Chaque masse peut se déplacer en translation dans un espace cylindrique du carter. L'ensemble massique ayant deux masses disposées de part et d'autre de la vis sans fin et maintenues chacune dans un espace cylindrique, une rotation de la vis sans fin ne peut pas induire une rotation de l'ensemble massique autour de cette vis sans fin. En effet, le carter offre uniquement une liberté de déplacement en translation le long de la direction longitudinale à l'ensemble massique. Par suite, une rotation de la vis sans fin selon un sens de rotation induit le déplacement de l'ensemble massique vers l'extrémité libre ou vers le pied de la lame.

L'organe pesant peut être soumis à de fortes accélérations verticales à des fréquences importantes. Dès lors, les moyens de pression permettent d'obtenir un guidage de l'ensemble massique et notamment de chaque masse sans jeu.

En effet, chaque moyen de pression présente un organe élastique décrivant une ligne fermée. Cette ligne fermée peut être homothétique à une ligne fermée parcourue par une génératrice de l'espace cylindrique contenant la masse correspondante.

L'organe élastique exerce un effort radial sur une bague fendue. Le terme « radial » signifie que l'organe élastique exerce un effort sur une bague fendue selon toutes les directions perpendiculaires à l'axe de translation de la masse correspondante dans le carter.

Un tel effort radial permet de déformer la bague fendue pour la plaquer contre la face interne du carter en position de montage, par exemple sur un arc de cercle d'au moins 180 degrés.

Une telle bague fendue peut être réalisée à partir d'un matériau thermoplastique pour présenter un faible coefficient de frottement. Dès lors, la bague fendue permet de bloquer radialement la masse correspondante dans le carter, tout en ayant un impact faible sur la translation de cette masse dans le carter.

L'organe élastique poussant une bague fendue permet d'absorber les fortes accélérations et vibrations verticales subies par la masse. En effet, cet organe élastique peut être comprimé ou étiré en fonction des efforts subis par la masse, pour toujours maintenir la bague fendue contre le carter et en maintenant un jeu entre la masse et le carter. Par suite, un jeu est globalement présent entre la masse et le carter, à l'exception des zones comprenant les bagues fendues où ledit jeu est comblé par la bague fendue sous la pression de l'organe élastique. Chaque masse est ainsi suspendue, dans le sens « suspension dynamique », dans un espace cylindrique à l'intérieur du carter.

De plus, l'utilisation d'au moins deux moyens de pression par masse optimise le guidage en translation de la masse.

Les moyens de pression permettent ainsi d'avoir finalement un système mécanique prévenant des dégradations sur les pièces coûteuses, en tendant à au moins limiter les risques de frottement entre les masses et le carter. Par exemple, les organes élastiques peuvent être dimensionnés pour exercer un effort sur les bagues supérieur aux efforts subis par les masses en position de montage.

Les moyens de pression permettent aussi d'éviter un blocage des masses dans le carter, car la souplesse introduite par les organes élastiques permet de s'affranchir de l'hyperstatisme du système mécanique.

Par suite, le résonateur présente une structure relativement simple permettant de guider l'ensemble massique.

De plus, l'espace interne du carter présente deux espaces cylindriques juxtaposés et un espace central ayant conjointement une forme de « jumelle ». Cette architecture permet l'agencement de deux masses respectivement dans les deux espaces cylindriques. Cette architecture permet d'optimiser l'encombrement en élévation du résonateur, et ainsi d'éviter une rotation de l'ensemble massique autour de la vis sans fin. Le résonateur n'a alors pas besoin des colonnettes de certains arts antérieurs. En outre, chaque masse peut tourner sur elle-même dans un espace cylindrique ce qui permet de mettre en oeuvre des moyens de fixation des masses au support relativement simples.

En outre, la simplicité du résonateur permet de pouvoir changer relativement facilement les bagues fendues, les moyens de pression et/ou l'organe de pression lors d'opérations de maintenance.

Par ailleurs, le résonateur par l'aspect modulaire des masses mobiles permet un réglage en effort et en fréquence en jouant sur la taille, le matériau plus ou moins dense et la position de ces masses mobiles. Il en est de même pour l'effort exercé sur les bagues fendues en raison de la géométrie et des matériaux des organes élastiques ou encore des bagues fendues.

Le résonateur peut de plus comporter une ou plusieurs des caractéristiques qui suivent.

Ainsi, le moyen d'entraînement peut comporter un moteur fixé au carter.

Par exemple, le moteur est un moteur électrique qui entraîne en rotation la vis sans fin autour de son axe d'extension selon un sens dextrorsum ou senestrorsum sur ordre d'une unité de traitement.

Par ailleurs, les deux masses sont par exemple identiques est disposées transversalement de manière symétrique de part et d'autre d'un plan de symétrie contenant ladite direction longitudinale.

Les deux masses se déplacent ainsi conjointement suite à une rotation de la vis sans fin sans introduire des contraintes dans le résonateur.

De même, le support peut présenter une symétrie par rapport à ce plan de symétrie.

Selon un autre aspect, au moins un moyen de pression peut comporter deux organes élastiques exerçant un effort sur une unique bague fendue.

Selon un autre aspect, au moins une bague fendue voire chaque bague fendue s'étend entre deux extrémités séparées circonférentiellement par une fente, ladite fente s'étendant selon une direction qui n'est pas parallèle à ladite direction longitudinale.

Une telle bague fendue présente ainsi une fente biseautée permettant de garantir que la bague fendue couvre au moins partiellement l'organe élastique sur toute sa circonférence.

Selon un autre aspect, le support comporte une portion centrale portant l'écrou de coulissement et deux branches latérales s'étendant transversalement de part et d'autre de la portion centrale, les deux masses étant fixées respectivement aux deux branches latérales.

Eventuellement, les deux branches latérales s'étendent transversalement et symétriquement de part et d'autre de la portion centrale.

Le terme « transversalement » fait référence à des directions perpendiculaires à la direction longitudinale.

Cette structure du support permet ainsi de fixer aisément les masses au support, par une simple vis par exemple.

De plus, la portion centrale peut coopérer avec chaque bague fendue.

Par exemple, au moins un espace cylindrique peut avoir une forme de cylindre à base circulaire. Chaque génératrice de l'espace cylindrique parcourt alors une ligne fermée formant un cercle.

Chaque masse peut de plus n'être fixée que par un système boulon/écrou à une branche du support, et peut rester libre de tourner suivant un axe parallèle à l'axe d'extension de la vis sans fin. Un blocage par trois colonnettes n'est plus de mise.

Par ailleurs, la portion centrale peut s'étendre transversalement entre deux faces latérales de cette portion centrale, les deux faces latérales étant respectivement en regard des deux masses, chaque moyen de pression d'une masse étant agencé en regard d'une face latérale, chaque face latérale délimitant partiellement un dit espace cylindrique.

Chaque face latérale est donc dans la continuité de la face interne du carter autour d'un espace cylindrique.

Par exemple dans le cadre d'un espace cylindrique à base circulaire, chaque face latérale décrit un arc de cercle complémentaire d'un arc de cercle décrit par la face interne du carter.

Par exemple, les deux faces latérales présentent une forme convexe en regard l'une de l'autre.

Selon un autre aspect, au moins une masse peut comporter deux éléments pesants distincts, les deux éléments pesants étant longitudinalement fixés de part et d'autre d'une branche du support, chaque élément pesant portant un moyen de pression.

L'utilisation de deux éléments pesants offre notamment des facultés de réglage intéressantes.

Par ailleurs, les deux éléments pesants peuvent être identiques. Eventuellement des éléments massiques additionnels peuvent permettre de régler finement la position du centre de gravité du résonateur.

De manière alternative, les deux éléments pesants sont différents, les deux éléments pesants s'étendant longitudinalement respectivement sur deux distances différentes.

Selon un autre aspect, le carter peut être réalisé à partir d'un matériau présentant une masse volumique plus faible qu'un matériau formant l'ensemble massique.

Les deux masses et le support peuvent être réalisés à partir de matériaux à haute masse volumique, et éventuellement du même matériau. Par exemple, les deux masses et le support sont réalisés à partir d'un matériau connu sous la marque inermet®.

Le carter peut à l'inverse comprendre un alliage à faible masse volumique pour limiter son impact sur le positionnement du centre de gravité de l'organe pesant.

Dès lors, le réglage du résonateur par déplacement de l'ensemble massique est facilité.

Par ailleurs, au moins un organe élastique peut être un joint contraint par ladite gorge pour exercer un effort selon des directions radiales sur la bague fendue correspondante.

Le joint peut être un joint torique. De manière alternative, la section du joint peut prendre plusieurs formes : carré, multilobée, circulaire, polymorphe.

Le joint est placé dans une gorge dont la forme contraint légèrement le joint, l'obligeant à exercer un effort sur une bague fendue.

Le joint plus ou moins écrasé par la gorge assure ainsi une fonction « ressort » sur la bague fendue correspondante. Cette fonction tend justement à « ouvrir » la bague fendue pour la plaquer contre le carter voire le support.

Cette caractéristique permet d'obtenir un organe élastique relativement simple et apte à exercer un effort radial réparti de manière homogène sur une bague fendue.

Selon un autre aspect, la gorge peut présenter un espace interne contenant le joint, l'espace interne s'étendant longitudinalement sur une longueur de gorge et radialement sur un rayon de gorge, ledit joint s'étendant longitudinalement sur une longueur de joint et radialement sur un rayon de joint, ledit rayon de joint est supérieur audit rayon de gorge.

Une telle gorge contraint le joint selon des directions radiales, à savoir selon sa profondeur

De manière complémentaire ou alternative, la gorge présentant un espace interne contenant le joint, l'espace interne s'étendant longitudinalement sur une longueur de gorge et radialement sur un rayon de gorge, le joint s'étendant longitudinalement sur une longueur de joint et radialement sur un rayon de joint, la longueur de joint au repos est inférieure à la longueur de gorge.

Une telle gorge peut contraindre le joint longitudinalement, à savoir selon sa longueur, lorsque le joint est radialement comprimé pour maximiser l'effort exercé sur une bague fendue par le joint.

Selon un autre aspect, la gorge présente un espace interne contenant ledit joint et un espace externe, l'espace externe entourant l'espace interne et contenant partiellement la bague fendue, l'espace interne s'étendant longitudinalement selon une longueur interne inférieure à une longueur externe selon laquelle s'étend l'espace externe.

Selon un autre aspect, la face interne peut être recouverte d'un lubrifiant.

En variante, la face interne du carter peut être légèrement lubrifiée pour obtenir un glissement optimisé des bagues fendues contre le carter, afin de limiter l'usure du moyen d'entraînement et la vis sans fin.

L'invention vise de plus un aéronef comportant un résonateur du type décrit précédemment.

En particulier mais non exclusivement, la lame du résonateur peut être articulée à une barre de suspension d'une boîte de transmission de puissance et à un plancher.

L'invention et ses avantages apparaîtront avec plus de détails dans le cadre de la description qui suit avec des exemples donnés à titre illustratif en référence aux figures annexées qui représentent :
- la figure 1, un schéma présentant un résonateur selon l'invention agencé sur un aéronef,
- la figure 2, un schéma présentant un organe pesant d'un résonateur selon l'invention,
- la figure 3, une vue éclatée présentant un ensemble massique de l'organe pesant,
- la figure 4, une coupe de cet ensemble massique,
- la figure 5 une vue de côté montrant une bague fendue biseautée,
- les figures 6 à 8, des schémas présentant des moyens de pression comprenant une bague fendue et un joint.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

Les directions présentent dans un plan Y,Z sont aussi qualifiées de radiales au regard de la direction longitudinale.

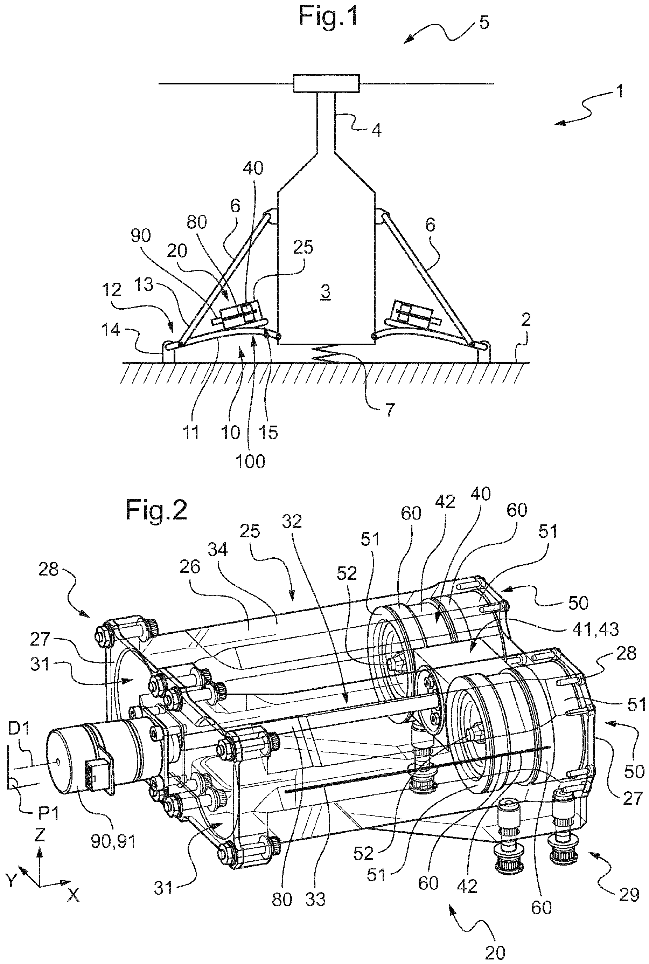

La figure 1 présente un aéronef 1 muni d'au moins un résonateur 10 selon l'invention.

En particulier, l'aéronef 1 peut comprendre une boîte de transmission de puissance 3 munie d'un mât rotor 4. Ce mât rotor 4 est solidaire en rotation d'un rotor 5. Ce rotor 5 peut participer à la sustentation et/ou à la propulsion et/ou au contrôle de l'aéronef. Par exemple, l'aéronef 1 est un giravion, le rotor 4 étant une voilure tournante de ce giravion.

La boîte de transmission de puissance est reliée à au moins un moteur non représenté. Le moteur met en mouvement la boîte de transmission de puissance 3, cette boîte de transmission de puissance entraînant la rotation du mat rotor 4 et par conséquent la rotation du rotor 5.

La boîte de transmission de puissance 3 est fixée à un plancher 2 par divers éléments. Par exemple, un premier système 7 attache le fond de la boîte de transmission de puissance au plancher 2.

De plus, des barres de suspension 6 sont articulées à un sommet de la boîte de transmission de puissance 3. Dès lors, chaque barre peut être attachée au plancher 2 par un résonateur 10 selon l'invention.

Ce résonateur 10 comporte une lame flexible 11. Cette lame 11 s'étend longitudinalement le long d'un axe d'extension d'un pied 12 vers une extrémité libre 15.

Dès lors, le pied 12 peut être articulé par une première articulation usuelle 13 à une barre de suspension 6, et par une deuxième articulation usuelle 14 au plancher 2. La première articulation 13 est longitudinalement disposée entre la deuxième articulation 14 et l'extrémité libre 15 selon la figure 1.

En outre, une lamelle flexible 100 peut s'étendre de la lame 11 à la boîte de transmission de puissance 3.

Par ailleurs, le résonateur comporte un organe pesant 20 fixé à la lame 11.

En particulier, l'organe pesant 20 présente un carter extérieur 25 qui est fixé à l'extrémité libre 15 de la lame 11. Ce carter extérieur 25 accueille en son sein un ensemble massique 40 mobile en translation le long d'une vis sans fin 80 pilotée en rotation par un moyen d'entraînement 90. A cet effet, l'ensemble massique comporte un écrou dit « écrou de coulissement » vissé sur la vis sans fin 80.

Le moyen d'entraînement 90 peut être commandé par une unité de traitement usuelle non représentée, et/ou par un bouton manoeuvré par un pilote. L'unité de traitement peut comprendre par exemple un processeur, un circuit intégré, un système programmable, un circuit logique, ces exemples ne limitant pas la portée donnée à l'expression « unité de traitement ».

Selon un autre aspect, le carter 25 peut être réalisé à partir d'un matériau moins dense qu'un matériau formant l'ensemble massique 40.

La figure 2 détaille un organe pesant selon l'invention.

Cet organe pesant comporte donc un carter 25. Ce carter 25 peut être fixé par des moyens usuels à la lame 11, tels que des moyens de vissage et par exemple des goujons 29.

Le carter 25 peut posséder divers organes fixés les uns aux autres. Par exemple, le carter 25 inclut une enceinte centrale 26 s'étendant longitudinalement entre deux ouvertures obturées par des flasques 27. Chaque flasque 27 est par exemple vissé par des vis 28 ou des boulons à l'enceinte centrale 26.

Le carter 25 présente une face interne 34 qui délimite un volume dit « volume interne ».

Ce volume interne peut comprendre au moins deux espaces cylindriques 31 en dehors d'un espace central 32 et éventuellement séparés transversalement par l'espace central 32. Par exemple, le volume interne peut comprendre uniquement deux espaces cylindriques 31 agencés en dehors de l'espace central 32, voire séparés transversalement par un espace central 32. Par exemple, les deux espaces cylindriques sont agencés symétriquement de part et d'autre d'un plan de symétrie P1 traversant l'espace central 32.

Dès lors, chaque espace cylindrique est physiquement délimité partiellement par la face interne 34. De plus, cet espace cylindrique est localement ouvert sur l'espace central 32.

Chaque espace cylindrique présente de fait une génératrice 33 qui est illustrée de manière schématique sur la figure 2. Cette génératrice a la forme d'un segment parallèle à la direction longitudinale D1. De plus, chaque espace cylindrique peut comprendre une base circulaire.

Dès lors, le volume interne à sensiblement une forme de « jumelle ».

La vis sans fin 80 s'étend alors dans le volume interne le long de la direction longitudinale D1. Cette direction longitudinale D1 peut être contenue dans le plan de symétrie P1.

Plus particulièrement, cette vis sans fin est agencée dans l'espace central 32.

Le moyen d'entraînement 90 peut ainsi comporter un moteur 91 porté par le carter et relié à la vis sans fin 80. Par exemple, un tel moteur 91 est porté un flasque 27 et se situe en dehors du volume interne.

Par ailleurs, l'ensemble massique 40 est emmanché autour de la vis sans fin 80, l'écrou de coulissement porté par l'ensemble massique étant vissé sur la vis sans fin 80.

Cet ensemble massique 40 s'étend transversalement dans chaque espace cylindrique 31 et dans l'espace central 32.

En effet, l'ensemble massique 40 comporte un support 41 qui s'étend au moins dans l'espace central 32. Ce support 41 porte l'écrou de coulissement vissé sur la vis sans fin.

De plus, l'ensemble massique 40 comporte une masse par espace cylindrique, soit deux masses 50 selon l'exemple représenté.

Chaque masse 50 est solidaire en translation du support 41. Dès lors, lorsque la vis sans fin 80 induit la translation du support 41, chaque masse 50 est contrainte à translater au sein d'un espace cylindrique.

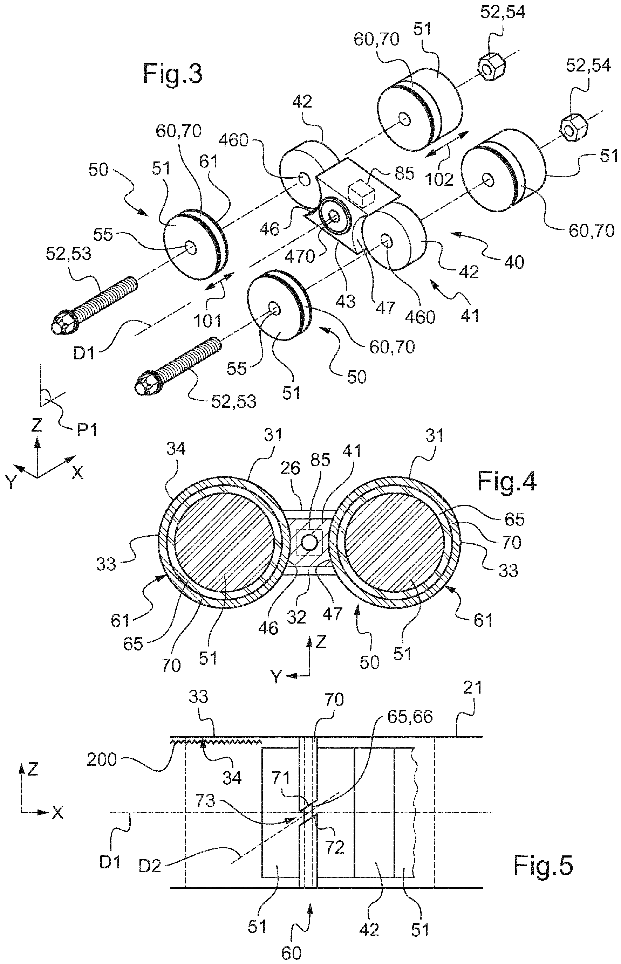

La figure 3 présente une vue éclatée d'un ensemble massique 40.

Le support 41 présente une portion centrale 43 qui porte l'écrou de coulissement 85. Cet écrou de coulissement 85 est représenté schématiquement sur la figure 3 via des pointillés. Cette portion centrale 43 est traversée longitudinalement de part en part par un orifice 470 le long de la direction longitudinale D1. Cet orifice est alors traversé par la vis sans fin 80 pour atteindre l'écrou de coulissement 85.

La portion centrale 43 coulisse alors dans l'espace central du carter.

Par ailleurs, le support 41 peut comporter au moins une branche pour porter les masses 50.

Par exemple, le support 41 comporte une branche par masse. Dès lors, le support 41 présenté comporte deux branches latérales 42 qui s'étendent transversalement de part et d'autre de la portion centrale 43. Chaque branche latérale 42 s'étend longitudinalement sur une longueur plus petite que la longueur d'extension de la portion centrale. Dès lors, la portion centrale saille longitudinalement des branches latérales 42, et par exemple de part et d'autre des branches latérales 42.

En outre, chaque branche s'étend dans un espace cylindrique et est conformée à cet espace cylindrique.

Dès lors, les masses 50 sont chacune fixées à une branche latérale. Par exemple, chaque branche latérale 42 comporte un orifice longitudinal 460 et chaque masse 50 comporte un orifice longitudinal 55. Dès lors, chaque masse est fixée à une branche latérale par un moyen de vissage 52. Ce moyen de vissage inclut un boulon 53 traversant l'orifice longitudinal 55 de la masse et l'orifice longitudinal 460 de la branche pour être vissé à un écrou de fixation 54.

Les deux masses 50 peuvent être identiques. Selon un autre aspect, les deux masses 50 peuvent être disposées transversalement de manière symétrique de part et d'autre du plan de symétrie P1 contenant la direction longitudinale D1.

Par ailleurs, chaque masse 50 inclut au moins deux moyens de pression 60 interposés entre cette masse 50 et la face interne 34, voire aussi entre la masse 50 et la portion centrale 43.

Chaque moyen de pression 60 est au moins partiellement agencé dans une gorge 61 ménagée dans la masse 50. Une telle gorge 61 débouche sur le volume interne du carter 25. Une gorge 61 peut décrire une ligne fermée, en étant par exemple une gorge annulaire. De plus, une gorge 61 peut être contenue dans un plan perpendiculaire à la direction longitudinale D1.

La figure 4 présente une coupe de l'ensemble massique 40 selon un tel plan perpendiculaire à la direction longitudinale D1.

Chaque moyen de pression 60 comprend au moins un organe élastique 65 disposé dans un fond de la gorge 61. De plus, le moyen de pression 60 est pourvu d'une bague fendue 70 qui entoure l'organe élastique 65.

Dès lors, l'organe élastique exerce des efforts radiaux sur la bague fendue pour plaquer la bague fendue 70 contre la face interne 34 qui entoure la masse 50. La bague fendue 70 saille alors partiellement en dehors de la gorge 61 pour ménager un jeu entre le carter 25, et donc la surface interne 34, et la masse 50.

Par ailleurs, la portion centrale 43 du support 41 peut s'étendre transversalement entre deux faces latérales 46, 47. Ces deux faces latérales 46, 47 sont respectivement en regard des deux masses 50. Chaque face latérale 46, 47 délimite ainsi partiellement un espace cylindrique 31. Dans le cadre d'un espace cylindrique à base circulaire, chaque face latérale décrit un arc de cercle situé dans le prolongement de l'arc de cercle décrit par le carter autour de l'espace cylindrique correspondant. Chaque face latérale 46, 47 est donc dans le prolongement d'une surface interne 34.

En présence d'espaces cylindriques à base circulaire, une masse 50 peut être libre de tourner sur elle-même autour du moyen de vissage 52. Il n'y a donc pas lieu de chercher à bloquer une telle rotation contrairement aux dispositifs à colonnettes connus.

Dès lors, chaque moyen de pression 60 peut être agencé en regard d'une face latérale 46, 47 pour tendre plaquer à la bague fendue 70 contre une face latérale 46, 47.

On note que la figure 4 montre aussi l'écrou de coulissement 85 vissé à la vis sans fin. Toutefois, un tel écrou de coulissement peut être localisé dans un tronçon qui n'est pas en regard d'un moyen de pression, par exemple un tronçon en regard des branches latérales du support.

Par ailleurs et en référence à la figure 5, une bague fendue 70 s'étend entre deux extrémités 71, 72. Ces deux extrémités sont séparées circonférentiellement par une fente 73. Favorablement, ladite fente 73 s'étend selon une direction D2 de symétrie qui n'est pas parallèle à la direction longitudinale D1 pour empêcher un contact entre l'organe élastique et le carter.

Selon un autre aspect et en référence de nouveau à la figure 3, chaque masse 50 comprend au moins un élément pesant 51 fixé au support 41.

Par exemple, une masse 50 peut comporter deux éléments pesants 51 distincts. Dès lors, les deux éléments pesants 51 peuvent être longitudinalement fixés de part et d'autre d'une branche latérale 42 dudit support 41.

Dans ce cas de figure, chaque élément pesant 51 peut porter un moyen de pression 60.

Les deux éléments pesants 51 peuvent être identiques.

Toutefois, selon l'exemple la figure 3, les deux éléments pesants 51 sont différents. Par suite, les deux éléments pesants 51 s'étendant longitudinalement respectivement sur deux distances 101, 102 différentes.

Par ailleurs, la face interne 34 peut être recouverte d'un lubrifiant 200.

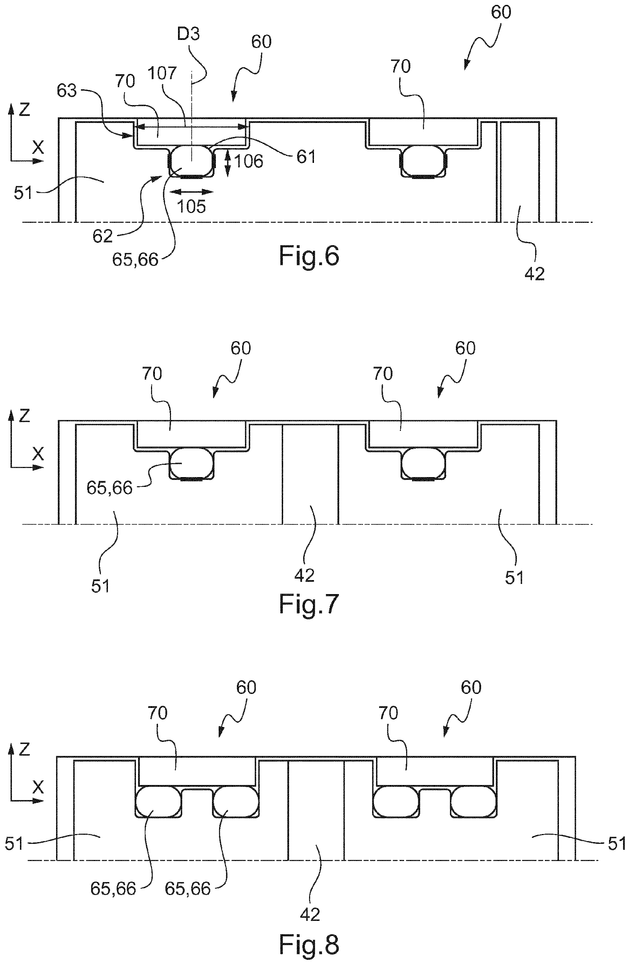

En référence à la figure 6 et indépendamment du nombre d'éléments pesants 51 d'une masse 50, un organe élastique 65 peut être un joint 66 contraint par la gorge 61 pour exercer un effort selon des directions radiales D3 sur la bague fendue 70 correspondante.

Par exemple, la gorge 61 présente un espace interne 62 et un espace externe 63 entourant l'espace interne 62. L'espace interne 62 peut s'étendre longitudinalement selon une longueur interne 105 inférieure à une longueur externe 107 selon laquelle s'étend l'espace externe 63.

Le joint est alors agencé dans l'espace interne alors que la bague fendue 70 est agencé dans l'espace externe 63.

Cet espace interne 62 s'étend longitudinalement sur une longueur dite « longueur de gorge 105 » et radialement sur une hauteur dite « rayon de gorge 106 ».

Le joint 66 s'étend au repos, et donc lorsque le joint 66 n'est pas agencé dans une gorge, longitudinalement sur une longueur dite « longueur de joint » et radialement sur une hauteur dite « rayon de joint ».

Le rayon de joint est supérieur au rayon de gorge 106 et la longueur de joint est inférieure à la longueur de gorge 105. Lorsque le joint est agencé dans le résonateur ce joint est comprimé au moins radialement.

Selon la figure 6, la différence entre la longueur de gorge 105 et la longueur de joint peut être faible. Dès lors et en position de montage, le joint est aplati radialement et s'écrase longitudinalement contre les parois délimitant longitudinalement la gorge.

Dès lors, la gorge comprime aussi le joint 66 longitudinalement et tend à faire sortir le joint de l'espace interne 62 pour exercer un effort important sur la bague fendue 70.

Selon la figure 7, la différence entre la longueur de gorge 105 et la longueur de joint peut être importante pour éviter que la gorge exerce longitudinalement des efforts sur le joint.

Pour obtenir un effort radial important exercé par le joint sur la bague fendue, la variante de la figure 6 peut donc être préférentiellement utilisée.

Selon un autre aspect et en référence à la figure 8, un moyen de pression 60 peut comporter deux organes élastiques 65 exerçant un effort sur une unique bague fendue 70.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Résonateur (10) muni d'un organe pesant (20) et d'une lame (11) élastique, ledit organe pesant (20) comprenant un carter (25) fixé à ladite lame (11) élastique, ledit organe pesant (20) comprenant un ensemble massique (40) qui est mobile en translation dans ledit carter (25) selon une direction longitudinale (D1), ledit résonateur (10) comprenant un vis sans fin (80) engagée dans un écrou de coulissement (85) dudit ensemble massique (40), ledit résonateur (10) comprenant un moyen d'entraînement (90) apte à déplacer en rotation la vis sans fin (80) afin qu'une rotation de la vis sans fin (80) induise ladite translation,
ledit carter (25) présente une face interne (34) qui délimite partiellement au moins deux espaces cylindriques (31) présentant chacun une génératrice (33) parallèle à ladite direction longitudinale (D1), lesdits deux espaces cylindriques (31) étant disposés en dehors d'un espace central (32), ladite vis sans fin (80) étant agencée dans ledit espace central (32), ledit ensemble massique (40) comportant deux masses (50) coulissant respectivement dans lesdits deux espaces cylindriques (31), ledit ensemble massique (40) comprenant un support (41) portant ledit écrou de coulissement (85), chaque masse (50) comprenant au moins un élément pesant (51) fixé au support (41), chaque masse (50) présentant au moins deux moyens de pression (60) interposés entre cette masse (50) et ladite face interne (34), chaque moyen de pression (60) comprenant une gorge (61) **caractérisé en ce que** chaque gorge (61) est ménagée dans une circonférence d'une masse (50) et contenue dans un plan perpendiculaire à la direction longitudinale (D1), chaque gorge (61) décrivant une ligne fermée, chaque moyen de pression (60) comprenant au moins un organe élastique (65) disposé dans ladite gorge (61) et une bague fendue (70) plaquée contre ladite face interne (34) par ledit au moins un organe élastique (65) du moyen de pression (60), ladite bague fendue (70) saillant partiellement de ladite gorge (61).

2. Résonateur selon la revendication 1,
**caractérisé en ce que** les deux masses (50) sont identiques et disposées transversalement de manière symétrique de part et d'autre d'un plan de symétrie (P1) contenant ladite direction longitudinale (D1).

3. Résonateur selon l'une quelconque des revendications 1 à 2,
**caractérisé en ce qu'**au moins un moyen de pression (60) comporte deux organes élastiques (65) exerçant un effort sur une unique bague fendue (70).

4. Résonateur selon l'une quelconque des revendications 1 à 3,
**caractérisé en ce qu'**au moins une bague fendue (70) s'étend entre deux extrémités (71, 72) séparées circonférentiellement par une fente (73), ladite fente (73) s'étendant selon une direction (D2) qui n'est pas parallèle à ladite direction longitudinale (D1).

5. Résonateur selon l'une quelconque des revendications 1 à 4,
**caractérisé en ce que** ledit support (41) comporte une portion centrale (43) portant ledit écrou de coulissement (85) et deux branches latérales (42) s'étendant transversalement de part et d'autre de la portion centrale (43), lesdites deux masses (50) étant fixées respectivement auxdites deux branches latérales (42).

6. Résonateur selon la revendication 5,
**caractérisé en ce que** ladite portion centrale (43) s'étend transversalement entre deux faces latérales (46, 47), lesdites deux faces latérales (46, 47) étant respectivement en regard des deux masses (50), chaque moyen de pression (60) d'une masse (50) étant agencé en regard d'une face latérale (46, 47), chaque face latérale (46, 47) délimitant partiellement un dit espace cylindrique (31).

7. Résonateur selon l'une quelconque des revendications 1 à 6,
**caractérisé en ce qu'**au moins un espace cylindrique (31) a une forme de cylindre à base circulaire.

8. Résonateur selon l'une quelconque des revendications 1 à 7,
**caractérisé en ce qu'**au moins une masse (50) comporte deux éléments pesants (51) distincts, lesdits deux éléments pesants (51) étant longitudinalement fixés de part et d'autre d'une branche latérale (42) dudit support (41), chaque élément pesant (51) portant un moyen de pression (60).

9. Résonateur selon la revendication 8,
**caractérisé en ce que** lesdits deux éléments pesants (51) sont identiques.

10. Résonateur selon la revendication 8,
**caractérisé en ce que** lesdits deux éléments pesants (51) sont différents, lesdits deux éléments pesants (51) s'étendant longitudinalement respectivement sur deux distances (101, 102) différentes.

11. Résonateur selon l'une quelconque des revendications 1 à 10,
**caractérisé en ce que** ledit carter (25) est réalisé à partir d'un matériau présentant une masse volumique plus faible qu'un matériau formant l'ensemble massique (40).

12. Résonateur selon l'une quelconque des revendications 1 à 11,
**caractérisé en ce qu'**au moins un organe élastique (65) est un joint (66) contraint par ladite gorge (61) pour exercer un effort selon des directions radiales sur ladite bague fendue (70) correspondante.

13. Résonateur selon la revendication 12,
**caractérisé en ce que** ladite gorge (61) présente un espace interne (62) contenant ledit joint (66), ledit espace interne (62) s'étendant longitudinalement sur une longueur de gorge (105) et radialement sur un rayon de gorge (106), ledit joint (66) s'étendant longitudinalement sur une longueur de joint et radialement sur un rayon de joint, ledit rayon de joint est supérieur audit rayon de gorge (106).

14. Résonateur selon l'une quelconque des revendications 1 à 13,
**caractérisé en ce que** ladite gorge (61) présente un espace interne (62) contenant ledit joint (66), ledit espace interne (62) s'étendant longitudinalement sur une longueur de gorge (105) et radialement sur un rayon de gorge (106), ledit joint (66) s'étendant longitudinalement sur une longueur de joint et radialement sur un rayon de joint, ladite longueur de joint au repos est inférieure à ladite longueur de gorge (105).

15. Résonateur selon l'une quelconque des revendications 1 à 14,
**caractérisé en ce que** ladite face interne (34) est recouverte d'un lubrifiant (200).

16. Résonateur selon l'une quelconque des revendications 1 à 15,
**caractérisé en ce que** ladite gorge (61) présente un espace interne (62) contenant ledit joint (66) et un espace externe (63), ledit espace externe (63) entourant l'espace interne (62) et contenant partiellement ladite bague fendue (70), ledit espace interne (62) s'étendant longitudinalement selon une longueur interne (105) inférieure à une longueur externe (107) selon laquelle s'étend ledit espace externe (63).

17. Aéronef (1),
**caractérisé en ce que** ledit aéronef (1) comporte un résonateur (10) selon l'une quelconque des revendications 1 à 16.

## Patentansprüche

1. Resonator (10), der mit einem Wiegeorgan (20) und einer elastischen Klinge (11) versehen ist, wobei das Wiegeorgan (20) ein Gehäuse (25) umfasst, das an der elastischen Klinge (11) befestigt ist, wobei das Wiegeorgan (20) eine Massenbaugruppe (40) umfasst, die in Verschiebung in dem Gehäuse (25) gemäß einer Längsrichtung (D1) beweglich ist, wobei der Resonator (10) eine Schnecke (80) umfasst, die in eine Gleitmutter (85) der Massenbaugruppe (40) eingefügt ist, wobei der Resonator (10) ein Antriebsmittel (90) umfasst, das geeignet ist, um die Schnecke (80) in Drehung zu verlagern, damit eine Drehung der Schnecke (80) die Verschiebung induziert,
wobei das Gehäuse (25) eine Innenfläche (34) aufweist, die teilweise mindestens zwei zylindrische Räume (31) abgrenzt, die jeweils eine Mantellinie (33) parallel zu der Längsrichtung (D1) aufweisen, wobei die zwei zylindrischen Räume (31) außerhalb eines zentralen Raums (32) angeordnet sind, wobei die Schraube (80) in dem zentralen Raum (32) eingerichtet ist, wobei die Massenbaugruppe (40) zwei Massen (50) umfasst, die jeweils in den zwei zylindrischen Räumen (31) gleiten, wobei die Massenbaugruppe (40) einen Träger (41) umfasst, der die Gleitmutter (85) trägt, wobei jede Masse (50) mindestens ein Wiegeelement (51), das an dem Träger (41) befestigt ist, umfasst, wobei jede Masse (50) mindestens zwei Druckmittel (60) aufweist, die zwischen dieser Masse (50) und der Innenfläche (34) eingefügt sind, wobei jedes Druckmittel (60) eine Nut (61) umfasst, **dadurch gekennzeichnet, dass** jede Nut (61) in einem Umfang einer Masse (50) eingerichtet und in einer Ebene senkrecht zu der Längsrichtung (D1) enthalten ist, wobei jede Nut (61) eine geschlossene Linie beschreibt, wobei jedes Druckmittel (60) mindestens ein elastisches Organ (65) umfasst, das in der Nut (61) angeordnet ist, und einen Spaltring (70), der gegen die innere Fläche (34) von dem mindestens einen elastischen Organ (65) des Druckmittels (60) angedrückt ist, wobei der Spaltring (70) teilweise aus der Nut (61) vorragt.

2. Resonator nach Anspruch 1,
**dadurch gekennzeichnet, dass** die zwei Massen (50) identisch und quer symmetrisch zu beiden Seiten einer Symmetrieebene (P1), die die Längsrichtung (D1) enthält, angeordnet sind.

3. Resonator nach einem der Ansprüche 1 bis 2,
**dadurch gekennzeichnet, dass** mindestens ein Druckmittel (60) zwei elastische Organe (65) umfasst, die eine Kraft auf einen einzigen Spaltring (70) ausüben.

4. Resonator nach einem der Ansprüche 1 bis 3,
**dadurch gekennzeichnet, dass** sich mindestens ein Spaltring (70) zwischen zwei Enden (71, 72), die umfänglich von einem Schlitz (73) getrennt sind, erstreckt, wobei sich der Schlitz (73) entlang einer Richtung (D2) erstreckt, die zu der Längsrichtung (D1) nicht parallel ist.

5. Resonator nach einem der Ansprüche 1 bis 4,
**dadurch gekennzeichnet, dass** der Träger (41) einen zentralen Abschnitt (43) umfasst, der die Gleitmutter (45) und zwei seitliche Schenkel (42), die sich zu beiden Seiten des zentralen Abschnitts (43) erstrecken, trägt, wobei die zwei Massen (50) jeweils an den zwei seitlichen Schenkeln (42) befestigt sind.

6. Resonator nach Anspruch 5,
**dadurch gekennzeichnet, dass** sich der zentrale Abschnitt (43) quer zwischen zwei seitlichen Flächen (46, 47) erstreckt, wobei die zwei seitlichen Flächen (46, 47) jeweils gegenüber den zwei Massen (50) liegen, wobei jedes Druckmittel (60) einer Masse (50) gegenüber einer seitlichen Fläche (46, 47) eingerichtet ist, wobei jede seitliche Fläche (46, 47) teilweise einen zylindrischen Raum (31) abgrenzt.

7. Resonator nach einem der Ansprüche 1 bis 6,
**dadurch gekennzeichnet, dass** mindestens ein zylindrischer Raum (31) eine Zylinderform mit kreisförmiger Basis hat.

8. Resonator nach einem der Ansprüche 1 bis 7,
**dadurch gekennzeichnet, dass** mindestens eine Masse (50) zwei getrennte Wiegeelemente (51) umfasst, wobei die zwei Wiegeelemente (51) längs zu beiden Seiten eines seitlichen Schenkels (42) des Trägers (41) befestigt sind, wobei jedes Wiegeelement (51) ein Druckmittel (60) trägt.

9. Resonator nach Anspruch 8,
**dadurch gekennzeichnet, dass** die zwei Wiegeelemente (51) identisch sind.

10. Resonator nach Anspruch 8,
**dadurch gekennzeichnet, dass** die zwei Wiegeelemente (51) unterschiedlich sind, wobei sich die zwei Wiegeelemente (51) längs jeweils auf zwei unterschiedlichen Abständen (101, 102) erstrecken.

11. Resonator nach einem der Ansprüche 1 bis 10,
**dadurch gekennzeichnet, dass** das Gehäuse (25) ausgehend von einem Material hergestellt ist, das eine geringere Dichte als ein Material, das die Massenbaugruppe (40) bildet, aufweist.

12. Resonator nach einem der Ansprüche 1 bis 11,
**dadurch gekennzeichnet, dass** mindestens ein elastisches Organ (65) eine Dichtung (66) ist, die von der Nut (61) gespannt wird, um eine Kraft entlang radialer Richtungen auf den entsprechenden Spaltring (70) auszuüben.

13. Resonator nach Anspruch 12,
**dadurch gekennzeichnet, dass** die Nut (61) einen Innenraum (62) aufweist, der die Dichtung (66) enthält, wobei sich der Innenraum (62) längs auf einer Nutlänge (105) erstreckt und radial auf einem Nutradius (106) erstreckt, wobei sich die Dichtung (66) längs auf einer Dichtungslänge und radial auf einem Dichtungsradius erstreckt, wobei der Dichtungsradius größer ist als der Nutradius (106).

14. Resonator nach einem der Ansprüche 1 bis 13,
**dadurch gekennzeichnet, dass** die Nut (61) einen Innenraum (62) aufweist, der die Dichtung (66) enthält, wobei sich der Innenraum (62) längs auf einer Nutlänge (105) und radial auf einem Nutradius (106) erstreckt, wobei sich die Dichtung (66) längs auf einer Dichtungslänge und radial auf einem Dichtungsradius erstreckt, wobei die Dichtungslänge im Ruhezustand kleiner ist als die Nutlänge (105).

15. Resonator nach einem der Ansprüche 1 bis 14,
**dadurch gekennzeichnet, dass** die innere Fläche (34) mit einem Schmiermittel (200) bedeckt ist.

16. Resonator nach einem der Ansprüche 1 bis 15,
**dadurch gekennzeichnet, dass** die Nut (61) einen Innenraum (62) aufweist, der die Dichtung (66) enthält, und einen Außenraum (63), wobei der Außenraum (63) den Innenraum (62) umgibt und den Spaltring (70) teilweise enthält, wobei sich der Innenraum (62) längs entlang einer Innenlänge (105), die kleiner ist als eine Außenlänge (107), entlang der sich der Außenraum (63) erstreckt, erstreckt.

17. Luftfahrzeug (1),
**dadurch gekennzeichnet, dass** das Luftfahrzeug (1) einen Resonator (10) nach einem der Ansprüche 1 bis 16 umfasst.

## Claims

1. Resonator (10) equipped with a heavy member (20) and an elastic blade (11), the said heavy member (20) comprising a casing (25) fixed to the said elastic blade (11), the said heavy member (20) comprising a mass assembly (40) which is mobile in translation in the said casing (25) along a longitudinal direction (D1), the said resonator (10) comprising an endless screw (80) inserted into a sliding nut (85) of the said mass assembly (40), the said resonator (10) comprising a drive means (90) able to rotate the endless screw (80) so that a rotation of the endless screw (80) induces the said translation,
the said casing (25) having an internal face (34) which partially delimits at least two cylindrical spaces (31) each having a generator (33) parallel to the said longitudinal direction (D1), the said two cylindrical spaces (31) being disposed outside a central space (32), the said endless screw (80) being arranged in the said central space (32), the said mass assembly (40) comprising two masses (50) sliding respectively in the said two cylindrical spaces (31), the said mass assembly (40) comprising a support (41) bearing the said sliding nut (85), each mass (50) comprising at least one heavy element (51) fixed to the support (41), each mass (50) having at least two pressure means (60) interposed between this mass (50) and the said internal face (34), each pressure means (60) comprising a groove (61) **characterised in that** each groove (61) is provided in a circumference of a mass (50) and contained in a plane perpendicular to the longitudinal direction (D1), each groove (61) following a closed line, each pressure means (60) comprising at least one elastic member (65) disposed in the said groove (61) and a split bushing (70) pressed against the said internal face (34) by the said at least one elastic member (65) of the pressure means (60), the said split bushing (70) partially protruding from the said groove (61).

2. Resonator according to Claim 1,
**characterised in that** the two masses (50) are identical and disposed transversally in a symmetrical manner on both sides of a plane of symmetry (P1) containing the said longitudinal direction (D1).

3. Resonator according to either one of Claims 1 and 2,
**characterised in that** at least one pressure means (60) comprises two elastic members (65) exerting a force on a single split bushing (70).

4. Resonator according to any one of Claims 1 to 3,
**characterised in that** at least one split bushing (70) extends between two extremities (71, 72) separated circumferentially by a slot (73), the said slot (73) extending along a direction (D2) which is not parallel to the said longitudinal direction (D1).

5. Resonator according to any one of Claims 1 to 4,
**characterised in that** the said support (41) comprises a central portion (43) bearing the said sliding nut (85) and two lateral branches (42) extending transversally on both sides of the central portion (43), the said two masses (50) being fixed respectively to the said two lateral branches (42).

6. Resonator according to Claim 5,
**characterised in that** the said central portion (43) extends transversally between two lateral faces (46, 47), the said two lateral faces (46, 47) being respectively opposite the two masses (50), each pressure means (60) of a mass (50) being arranged opposite a lateral face (46, 47), each lateral face (46, 47) partially delimiting a said cylindrical space (31).

7. Resonator according to any one of Claims 1 to 6,
**characterised in that** at least one cylindrical space (31) has a cylinder shape with a circular base.

8. Resonator according to any one of Claims 1 to 7,
**characterised in that** at least one mass (50) comprises two distinct heavy elements (51), the said two heavy elements (51) being longitudinally fixed on both sides of a lateral branch (42) of the said support (41), each heavy element (51) bearing a pressure means (60).

9. Resonator according to Claim 8,
**characterised in that** the said two heavy elements (51) are identical.

10. Resonator according to Claim 8,
**characterised in that** the said two heavy elements (51) are different, the said two heavy elements (51) extending longitudinally respectively over two different distances (101, 102).

11. Resonator according to any one of Claims 1 to 10,
**characterised in that** the said casing (25) is made from a material having a lower density than a material forming the mass assembly (40).

12. Resonator according to any one of Claims 1 to 11,
**characterised in that** at least one elastic member (65) is a joint (66) constrained by the said groove (61) so as to exert a force along radial directions on the said corresponding split bushing (70).

13. Resonator according to Claim 12,
**characterised in that** the said groove (61) has an internal space (62) containing the said joint (66), the said internal space (62) extending longitudinally over a groove length (105) and radially over a groove radius (106), the said joint (66) extending longitudinally over a joint length and radially over a joint radius, the said joint radius being greater than the said groove radius (106).

14. Resonator according to any one of Claims 1 to 13,
**characterised in that** the said groove (61) has an internal space (62) containing the said joint (66), the said internal space (62) extending longitudinally over a groove length (105) and radially over a groove radius (106), the said joint (66) extending longitudinally over a joint length and radially over a joint radius, the said joint length at rest being shorter than the said groove length (105).

15. Resonator according to any one of Claims 1 to 14,
**characterised in that** the said internal face (34) is covered with a lubricant (200).

16. Resonator according to any one of Claims 1 to 15,
**characterised in that** the said groove (61) has an internal space (62) containing the said joint (66) and an external space (63), the said external space (63) surrounding the internal space (62) and partially containing the said split bushing (70), the said internal space (62) extending longitudinally along an internal length (105) that is shorter than an external length (107) along which the said external space (63) extends.

17. Aircraft (1),
**characterised in that** the said aircraft (1) comprises a resonator (10) according to any one of Claims 1 to 16.
